# EUROPEAN PATENT APPLICATION

(11) **EP 3 572 705 A1**
(43) Date of publication of application: **27.11.2019**
(21) Application number: 18708154.2
(22) Date of filing: 19.01.2018
(51) Int. Cl.: F16L 37/00, B67D 1/00, F17C 1/00, F17D 1/00, F16L 37/248

(54) **ANTI-LEAK ARRANGEMENT APPLICABLE TO GAS SUPPLY NOZZLES**

(30) Priority: 19.01.2017 EP 17382023
(71) Applicant: Transportes Ham, S.L.U., 08630 Abrera (ES)
(72) Inventor: MURUGÓ PÉREZ, Antonio, 08630 Abrera (Barcelona) (ES)
(74) Representative: Ponti & Partners, S.L.P
(86) International application number: PCT/ES2018/070041
(87) International publication number: WO 2018/134466

(57) **Abstract**

The LNG fuelling nozzles are plugged to the vehicles propelled by natural gas specifically in a coupling means of the fuel tanks. During the unplugging of said nozzles once the tank has been filled cause always inevitably a gas leak and in the event of a leak during the filling there is a leak near the user which, in addition to be hazardous, pollute the environment and economically harms the user.

For this reason the invention proposes a solution consisting of channelling the gas from these leaks to a supplementary tank and, from it to the supply tank, recovering all the leaks, for which a pipe is used as main elements of the device, which is coupled to the bayonet by means of a seal connector made of Teflon or similar material and, a check valve at the inlet of the supplementary tank, said seal can be incorporated either in the bayonet or in the receptacle.

## Description

### Object of the invention

More specifically, the invention relates to a device created to recover the gas lost in the filling operation thereof, from a dispenser or supply tank to a vehicle fuel tank to fuel its combustion engine using gas instead of fuels such as gasoil, when the operator, in a totally manual manner, places in contact by means of the corresponding nozzle and hose belonging to the gas dispenser, said tank, filling it located in a suitable truck for transporting goods.

With current systems, in this filling operation (specifically at the end of the filling operation), either due to a maladjustment of the different parts of the appropriate means, or due to loss in efficiency of the corresponding airtight seals, leaks occur in the disconnection of the nozzle with the receptacle of the fuel tank of the vehicle, due to the natural gas in liquid state physically existing between both components (nozzle-receptacle), which in addition to representing a financial loss, presupposes a reduction in the mandatory safety measures complied with in this type of LNG (Liquefied natural gas) fuelling installations and environmental security.

In addition, the anti-leak device is capable of channeling the possible leakage during refuelling to a safe location, instead of as it currently occurs in the receptacle of the tank and close to the user.

Another object of the present invention is the LNG supply nozzle that incorporates said anti-leak device.

And yet another object of the present invention is the LNG supply nozzle assembly also including the receptacle which is mounted in the fuel tank of a vehicle; said assembly incorporating the anti-leak device.

### State of the art

European Patent of the same holder no. 16.183.947.7, the object of which is "Lng Nozzle Safety Locking Mechanism", discloses a nozzle coupled to a LNG dispenser incorporating a safety locking mechanism, which allows the transfer of LNG from a refuelling dispenser to a truck tank or other type of vehicle which is powered by gas.

The liquefied natural gas (LNG) dispensing nozzle described in European Patent No. 16,183,947.7 comprises an "Ice Breaker" type nozzle having sleeves, the nozzle being formed by an outer body, an inner body moving axially of the body outside by means of handles, being connected to a central element, and in the lower part of the "Ice Breaker" type nozzle disposing a quarter turn bayonet that is attachable to a receptacle of a fuel tank of a propelled vehicle to gas. Said quarter-turn bayonet which is formed by an upper part, a central part and a base which in working position are inserted in a base socket or receptacle base assembly forming part of the fuel tank of the vehicle or source tank.

However, even though said nozzle integrates the corresponding airtight seals and safety devices to avoid the undesired disconnection thereof in the aforementioned filling operation, it does not incorporate any measures to recover the gas lost during or at the end of said operation in the disconnection.

The laboratory tests performed determined that said losses, in the disconnection, range from 20 to 40 cm³ every refuelling operation, which bearing in mind that each operation takes between 15 and 20 minutes, gives an exact idea of the problem intended to be resolved with the device object of the invention.

If there is any problem during refuelling, the amount of gas lost may reach values much higher than those mentioned above.

### Description of the invention

The present invention is defined in the first, ninth and fifteenth independent claims.

LNG storage and supply installations are known, which as they contain a raw material with a high risk of explosion, prioritize any type of situation wherein, in an undesired manner, when gas is supplied to the tanker trucks or other types of gas-powered vehicles, such as box trucks, buses or vans, etc. which go to refuel, any type of accident may occur, in particular two types of hazardous situations may occur, in first place the leaking of liquefied gas at very low temperature and, in second place, the explosion in the event that when it vaporizes and enters gas phase it forms an explosive mixture with the atmosphere.

The supply tanks, also called sources of LNG in the industry, supply gas to the vehicle fuel tanks, through the corresponding dispenser and its corresponding nozzle which is attachable to said tanks. The connection of the source to the dispenser is permanent and, consequently, does not have considerable gas leaking problems, as it can be considered a fixed installation.

However, the connection of the dispenser to the tanks cannot be considered a fixed installation and the circumstance that every certain time the nozzle and its safety locking mechanism are coupled and decoupled, always involves its gas venting in its disconnection and also implies that said mechanism has a certain clearance in part of its elements, in addition to the corresponding wear and tear typical of the use and friction of the mechanical parts, although the leaking of gas in liquid state is not, in principle, explosive, it can damage operators who may be in the vicinity of the nozzle and locking and safety mechanism.

To prevent the aforementioned dangerous situations, the device object of the present invention has been projected, which is based on creating means to recover the gases that may escape in the transfer operation and in its end, from the dispenser to the vehicle tanks. Said means are specifically integrated in the nozzle locking mechanism attached to the dispenser and they are materialized in the machining of the quarter turn bayonet, existing in European Patent no. 16.183.947 in its upper part, to have an orifice wherein is incorporated one of the ends of a gas return pipe, with the corresponding connector aiding for its assembly in said upper part.

Alternatively, more than one hole may be provided in the bayonet, so that the ends of respective gas return tubes are incorporated in said holes. In this way, with two holes, for example, the gas recovery capacity is doubled, or in installations that require inerting after refuelling, one of the orifices can enter Nitrogen and, on the other, recovery of gas.

In the lower base of the quarter turn bayonet, said device object of the invention includes the incorporation of a Teflon seal or similar material, which neutralizes the clearances and wear of the coupling mechanism between the dispenser nozzle and vehicles' tanks.

Alternatively, said means to recover gases may incorporate the Teflon seal in the receptacle of the vehicles' tanks, considering this alternative as a technical equivalent of the assembly thereof in the lower base of the bayonet.

As is known by the earlier patent, the bayonet is intended to be used in top filling systems; a relevant characteristic of the locking and safety mechanisms included in said bayonet is the independent shut-off valve located in the flow trajectory within the bayonet.

The operator in charge of filling the tanker truck or vehicle tank pushes the bayonet provided in the upper part of the vehicle fuel tank until reaching the limit, by turning the bayonet a quarter of a turn, its locking to the receptacle is achieved, pushing it against it with the handles pulled completely backwards, then two grips are made to rotate forwards and the opening of the internal valves happens and it is possible to start the fuel filling. Once the vehicle tank has been filled, the opposite procedure is done to the one detailed in the previous paragraph for its disconnection.

By the opposite end of said gas recovery pipe it may be connected to the supply tank or to the "boil off" tank intercalating between both a check valve, avoiding that a sudden pressure change may check the gas recovery.

Additionally, and to improve the airtightness of the nozzle when it is coupled to the vehicle tank a seal is mounted in the lower part of the bayonet or in the receptacle itself.

The receptacle which is located in the upper part of the vehicle's fuel tank, it will continue to preserve its technical and formal characteristics that allow the bayonet to fit inside it, except the incorporation of said Teflon seal or another type of equivalent material.

A second object of the present invention is the LNG supply nozzle incorporating said anti-leak device described above.

A third object of the present invention is the LNG supply nozzle assembly also including the receptacle, the assembly incorporating the anti-leak device described above.

Other details and characteristics shall be revealed in the course of the description which will be made below, wherein reference will be made to figures specified in this specification, wherein by way of illustrative and non-limiting example, a graphic representation of the invention has been represented, which can be put into practice in all type of materials and measurements depending on the case.

### Description of the figures

A list is given below of the different parts of the invention, which, with the aid of the following numbers, are identified in the corresponding figures; (10, 10', 10") safety locking mechanism, (11) locking grips, (11a-11b) handles, (12) central outer body, (13) quarter turn bayonet, (13a) upper part of (13), (13b) central part of (13), (13c) lower base of (13), (14) optional protection element, (15) connection part, (16) counter-lever, (17) upper element, (18) central element, (19) conventional hose, (20) receptacle, (20-21) female socket base assembly, (21) wall of the vehicle tank, (22) openings, (23) elastic element, (25) seal, (26) fuelling or source tank, (27) gas return pipe, (28) connector, (29) dispenser, (30) fuel tank of the vehicle, (31) tank boil-off, (32) check valve, (33) orifice, (34) seal, (35) orifice, (36) orifice.
Figure no. 1 is a perspective of an embodiment of conventional locking mechanism (10), such as that object of European Patent no. 16.183.947.7.
Figure no. 2 is a top plan view of the conventional locking mechanism (10) such as that object of European Patent no. 16.183.947.7.

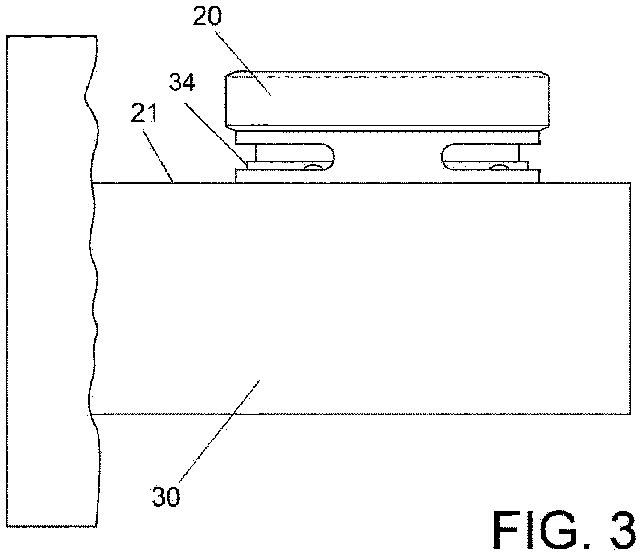

Figure no. 3 is a front elevational view of a vehicle fuel tank (30) in the upper part whereof, and mounted on its surface, is located the female socket base assembly (20-21), commonly called receptacle, in the interior of which fits, at the appropriate time, the quarter turn bayonet (13).
Figure no. 4 is (a) a plan view of the central element (18) modified by what is the object of the present application so that an orifice (36) is provided for the passage of the gas return pipe (27) from the bayonet (13), (b) is a top plan view of the bayonet (13) with the orifice (33) for the connector assembly (28).
Figure no. 5 is an explanatory block diagram of the elements that configure a LNG fuelling station to vehicle fuel tanks.
Figure no. 6a is a front elevational view of the bayonet (13) in which base (13c) is incorporated the seal (34) and, figure 6b is a front elevational view of the receptacle (20) wherein the seal (34) is incorporated.

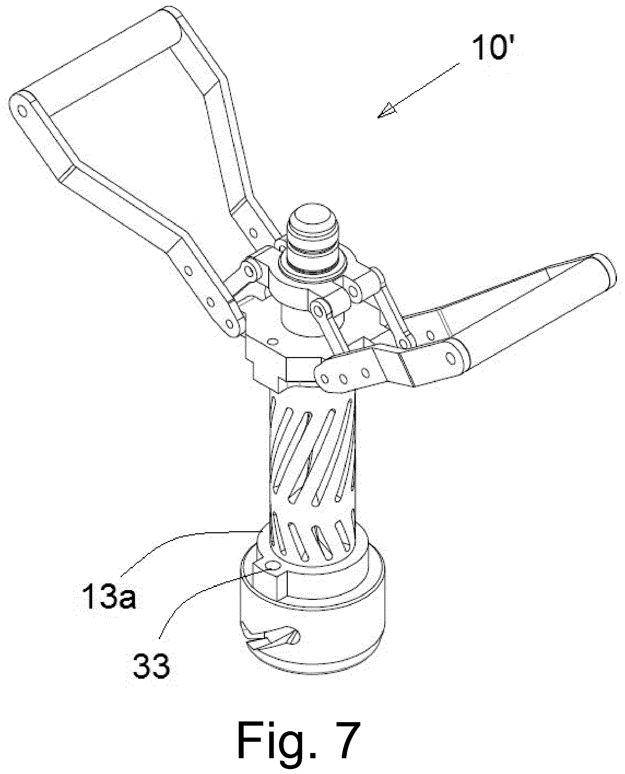

Figure 7 is a perspective of a second possible embodiment of the nozzle (10'), with the difference with respect to the nozzle (10) shown in figure 1 of eliminating the optional cone (14) and adding the machining in the bayonet of a hole (33). The rest of the components of the nozzle (10 ') are similar to those of the nozzle represented in figure 1.

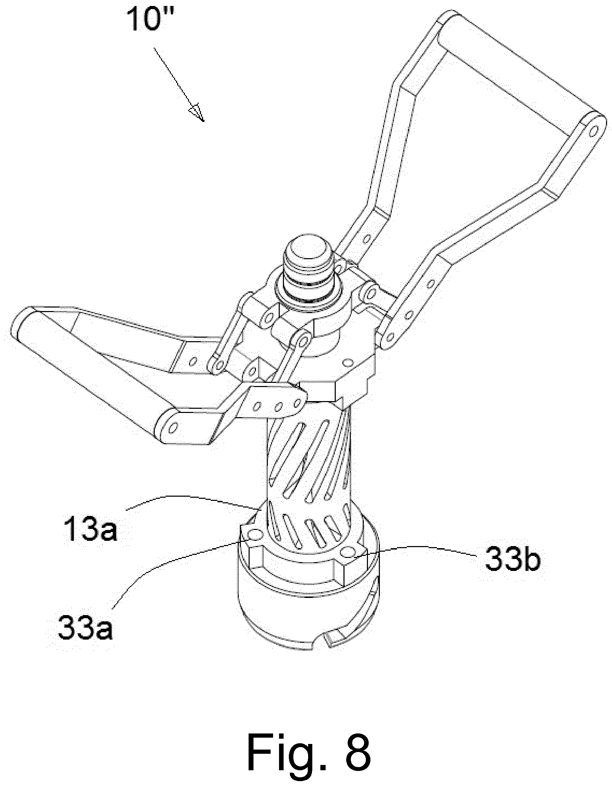

Figure 8 is a perspective view of another embodiment of nozzle (10 "), which is similar to nozzle (10') of figure 7 but with the provision of two holes (33a, 33b) provided in the bayonet, instead of one.

### Description of an embodiment of the invention

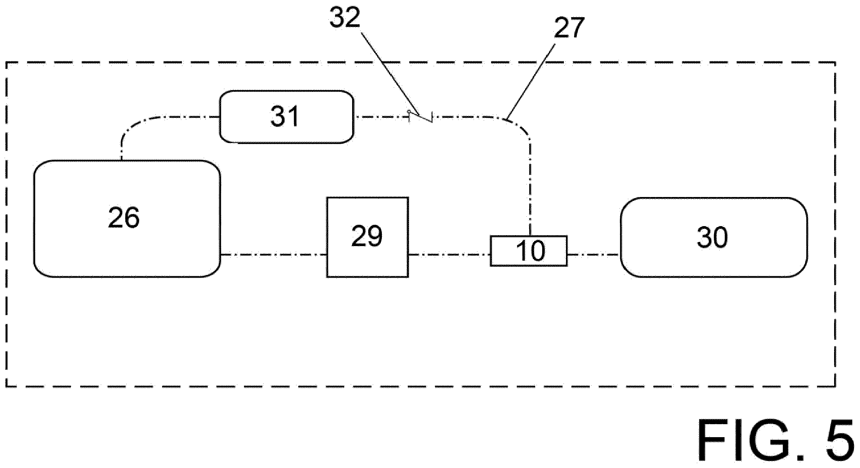

In one of the preferred embodiments of the invention and as can be seen in figure no. 5, a conventional LNG fuelling station comprises one or more LNG supply or source tanks (26), which supplies one or more dispensers (29), which has gas supply means such as a LNG fuelling nozzle not represented in the figures, provided with a safety locking mechanism (10), which is coupled to the tank (30), said tank being provided with a female socket base assembly (20-21) formed by the receptacle (20) and the wall (21).

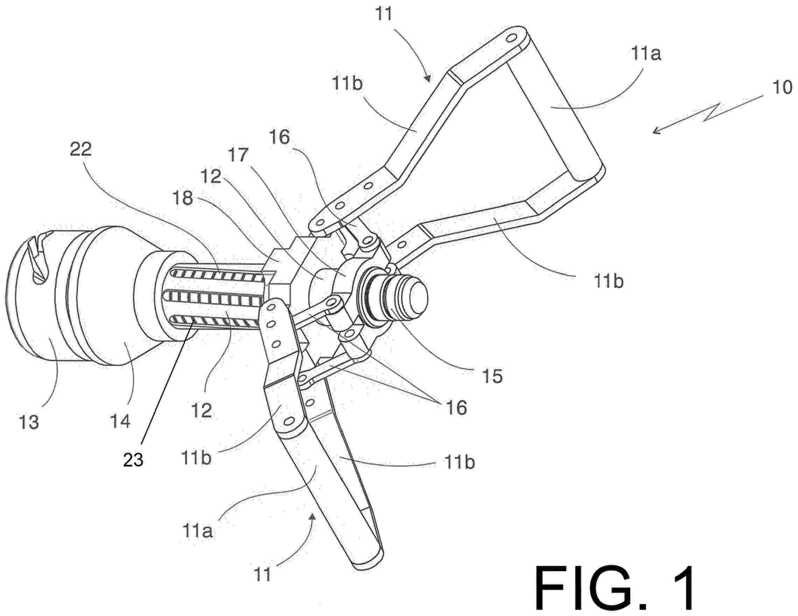

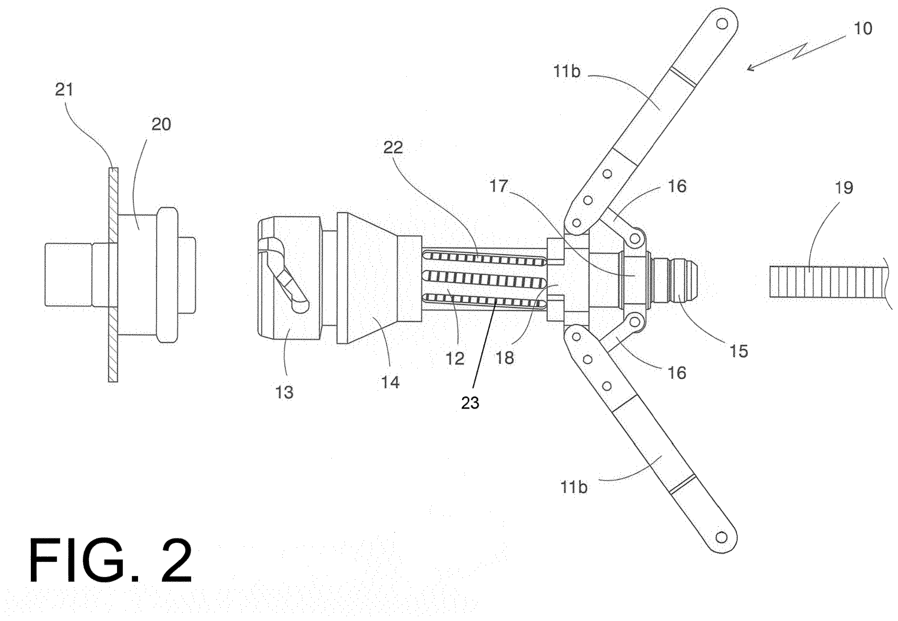

The security locking mechanism (10) as can be seen in figures no. 1 and 2 will remain the same except for the modifications that are part of the object of the present invention.

The safety locking mechanism (10), as can be seen in figures no. 1 and 2, shall continue to be the same except the modifications that form part of the object of the present invention. Through the invention claimed, and with the aforementioned purpose of avoiding gas leaks, a third tank (31), which in the present document is called boil-off, is optionally added to the supply tank, which receives the leaked gas in the safety locking mechanism (10) through a return pipe (27) which ends in the tank (31), intercalating an optional check valve (32) in the inlet of (31), which avoids a pressure change in the source (26) and prevents the entry in the tank (31) of the recovered gas.

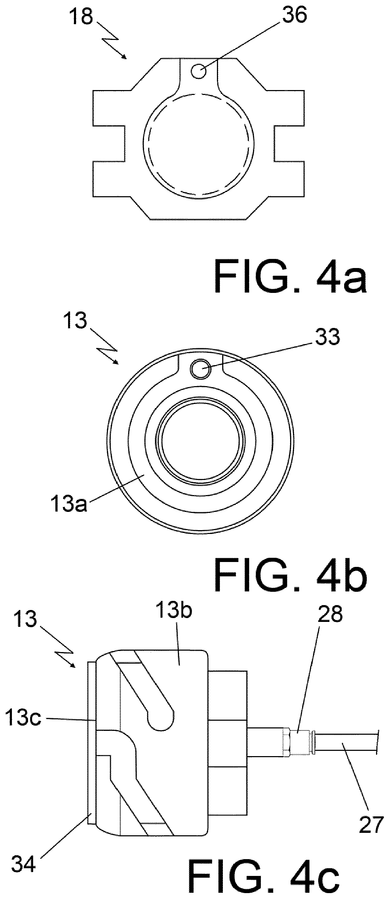

To recover the leaked gas, the quarter turn bayonet (13) has been modified, machining its upper part (13a) making therein an orifice (33) as can be seen in figure no. 4b, which connects the receptacle (20) in its inner part with the return pipe (27). Said pipe (27) incorporates through one of its ends a connector (28), which facilitates the join of the pipe (27) with said upper part (13a) of the bayonet (13), as can be seen in figure no. 4c.

This hole (33) in the quarter-turn bayonet (13) may alternatively be one or more holes (33).

In the same device, the central body (18) is modified for the passage of the pipe (27) making an orifice (36) in its upper part.

Additionally, a seal (34) is incorporated in the lower base (13c) of said bayonet (13), which avoids that the leaked gas can be lost in the coupling (21), forcing it to move to the tank (31) through the pipe (27). A groove will be made in the lower base of the bayonet, not represented in the figures, for the assembly of said seal (34).

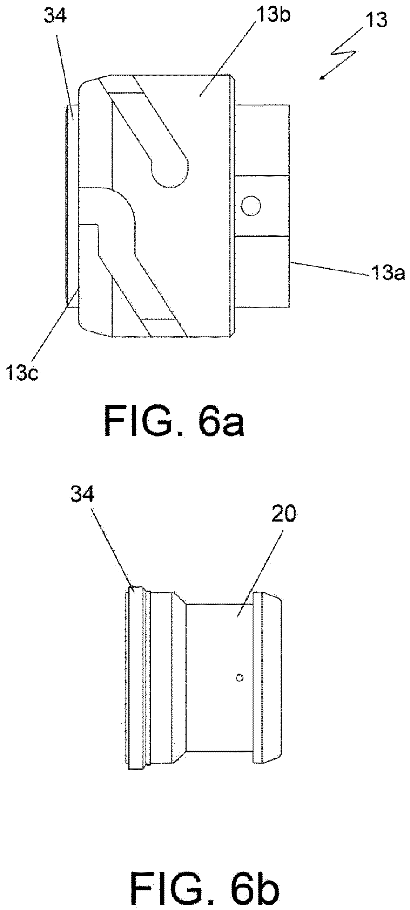

If the seal (34) is installed in the receptacle (20), it shall be machined so that it has a groove, not represented in the figures, as a means that the seal (34) is immobilized in said coupling (20-21). In both alternatives, both if the seal (34) is incorporated in the base (13c), or in the receptacle (20) as can be seen in figure no. 6.

Having sufficiently described the present invention, in correspondence with the attached figures, it is easy to understand that any modifications of details deemed convenient can be introduced therein, provided that it does not alter the essence of the invention which is summarized in the following claims.

## Claims

1. Anti-leak device applicable to gas fuelling nozzles, forming part of a LNG dispensing apparatus, said nozzles (10, 10', 10") incorporating a quarter-turn bayonet which is formed by an upper part, a central part and a base, which in working position are introduced in a female socket base assembly or receptacle forming part of the fuel tank of the vehicle or source tank **characterized in that** said device includes means of recovery of said gas, from the join of said nozzles (10, 10', 10") and its safety locking mechanisms attached to the female socket base assembly (20-21), female socket base assembly (20-21) comprising a receptacle (20), said means of recovery comprising an orifice (33) which is disposed in the upper part (13a) of the quarter turn bayonet (13), wherein is coupled a gas return pipe (27), a second orifice (36) in the central body (18) and, in the base of the bayonet (13c) or in the receptacle (20) a seal (34) is disposed forming part of said safety locking means (10).

2. Anti-leak device applicable to gas fuelling nozzles, according to the first claim, wherein one or more holes (33) are arranged in the upper part (13a) of the quarter-turn bayonet (13).

3. Anti-leak device applicable to gas fuelling nozzles, according to claim 1, wherein a connector (28) is threaded in the orifice (33) and in its upper end, as a means to make airtight the inlet of one of the ends of the gas return pipe (27), in the upper part (13a) of the bayonet (13).

4. Anti-leak device applicable to gas fuelling nozzles, according to claim 2, wherein in the holes (33) and at its upper end respective connectors (28) are threaded, as a mean to let the entrance of one from the ends of the gas return pipe (27), in the upper part (13a) of the bayonet (13).

5. Anti-leak device applicable to gas fuelling nozzles, according to claims 1, 2, 3 or 4, wherein the opposite end of the gas return pipe (27) incorporates a check valve (32) in the inlet to the tank (31).

6. Anti-leak device applicable to gas fuelling nozzles, according to any claims 1 to 5, wherein the seal (34)is incorporated in a groove machined in the base (13c) of the lower base of the quarter turn bayonet (13).

7. Anti-leak device applicable to gas fuelling nozzles, according to any claims 1 to 5, wherein the seal (34) fits in the receptacle (20) of the safety coupling mechanism (10) by means of the corresponding groove.

8. Anti-leak device applicable to gas fuelling nozzles, according to any of claims 1 to 7, wherein the seal (34) is made of Teflon.

9. Gas fuelling nozzle (10, 10', 10") to be coupled to an LNG receptacle (20) of a fuel tank of a vehicle, said nozzle comprises an "Ice Breaker" type nozzle having hoses, the nozzle being configured by an external body, an inner body that is moves axially of the outer body by means of levers, being connected to a central element, and in the lower part of the "Ice Breaker" type nozzle providing a quarter-turn bayonet which is engageable to a fuel tank receptacle of a gas-propelled vehicle, said quarter-turn bayonet which is formed by an upper part, a central part and, a base which in the working position is inserted in a receptacle, **characterized in that** the nozzle (10, 10', 10 ") comprises an anti-leak device including means for recovering said gas, coming from the union of said nozzle and their safety locking mechanisms annexed with the female socket base assembly (20-21), said means comprising a hole (33) in the upper part (13a) of the quarter-turn bayonet (13), in which a gas return pipe (27) is coupled (27).), a second hole (36) in the central body (18).

10. Gas fuelling nozzle (10, 10', 10"), according to claim 9, wherein one or several holes (33) are arranged in the upper part (13a) of the quarter-turn bayonet (13).

11. Gas fuelling nozzle (10, 10', 10"), according to claim 9, wherein a seal (34) forming part of said blocking means for security (10) is arranged at the base of the bayonet (13c).

12. Gas fuelling nozzle (10, 10', 10"), according to claim 9, wherein a connector (28) is threaded in the hole (33) and at its upper end, as a means for sealing the entrance of one end of the gas return pipe (27), in the upper part (13a) of the bayonet (13).

13. Gas fuelling nozzle (10, 10', 10"), according to claim 10, wherein respective connectors (28) are threaded in the holes (33) and at their upper end, as a mean for sealing the entrance of one end of the gas return pipe (27), in the upper part (13a) of the bayonet (13).

14. Gas fuelling nozzle (10, 10 ', 10' ') according to any of the claims 9 to 13, wherein the opposite end of the gas return pipe (27) incorporates at the entrance to the tank (31) a check valve (32).

15. Gas fuelling nozzle assembly, which incorporates a nozzle (10, 10', 10") defined in any of claims 9 to 14 and also a receptacle (20) mountable in a fuel tank of a vehicle, said receptacle (20) being provided with a seal (34).
